# EUROPEAN PATENT APPLICATION

(11) **EP 3 453 990 A1**
(43) Date of publication of application: **13.03.2019**
(21) Application number: 17795470.8
(22) Date of filing: 03.05.2017
(51) Int. Cl.: F25B 30/02, B60H 1/32

(54) **HEAT PUMP AIR-CONDITIONING SYSTEM AND ELECTRIC VEHICLE**

(30) Priority: 10.05.2016 CN 201610310425
(71) Applicant: BYD Company Limited, Shenzhen, Guangdong 518118 (CN)
(72) Inventor: TAN, Tingshuai, Shenzhen Guangdong 518118 (CN); YE, Meijiao, Shenzhen Guangdong 518118 (CN); CHEN, Xuefeng, Shenzhen Guangdong 518118 (CN)
(74) Representative: Hoffmann Eitle
(86) International application number: PCT/CN2017/082943
(87) International publication number: WO 2017/193852

(57) **Abstract**

This disclosure discloses a heat pump air-conditioning system and an electric vehicle. The heat pump air-conditioning system includes: an indoor condenser, an indoor evaporator, a compressor, an outdoor heat exchanger, and a first plate heat exchanger, the compressor is in communication with the indoor condenser, the indoor condenser is in communication with the outdoor heat exchanger through a first throttle branch or a first through-flow branch, the outdoor heat exchanger, through a second throttle branch or a second through-flow branch, is in communication with a first branch that is open or closed and is in communication with a second branch that is open or closed, the first branch is in communication with a low-pressure air inlet of the compressor, the second branch is in communication with the indoor evaporator, the indoor evaporator is in communication with a low-pressure air inlet of the compressor, and an enthalpy-increased branch is further disposed in the system, to improve a heating effect in low-temperature heating mode. Hence, effects, such as improving heating energy efficiency and regulatory requirements for defrosting and defogging, can be achieved, and the enthalpy-increased branch can significantly improve low-temperature heating performance of the system.

## Description

### BACKGROUND

### Technical Field

This disclosure relates to the field of air conditioners of electric vehicles, and specifically, to a heat pump air-conditioning system and an electric vehicle.

### Related Art

Unlike a conventional vehicle, an electric vehicle does not have excess engine heat for heating, and cannot provide a heat source for heating. Therefore, an air-conditioning system of the electric vehicle needs to have a heat supplying function, that is, supplying heat by using a heat pump air-conditioning system and/or an electric heater.

An invention patent application having the publication No. CN102788397A discloses an electric-vehicle heat pump air-conditioning system. The heat pump air-conditioning system may be applied to various types of electric vehicles. However, the system uses two outdoor heat exchangers (an outdoor condenser and an outdoor evaporator). Consequently, air resistance against a front end module of the vehicle is relatively large and the system structure is relatively complex, affecting a heating effect.

### SUMMARY

An objective of this disclosure is to provide a heat pump air-conditioning system and an electric vehicle, to resolve problems, such as low heating energy efficiency, impossibility in satisfying regulatory requirements for defrosting and defogging, and complex installation, of an vehicle heat pump air-conditioning system of a pure electric vehicle without an excess engine heat circulation system or a hybrid electric vehicle in electric-only mode, so that heating performance of the electric vehicle can be notably improved.

To achieve the foregoing objective, according to a first aspect of this disclosure, a heat pump air-conditioning system is provided. The heat pump air-conditioning system includes: an indoor condenser, an indoor evaporator, a compressor, an outdoor heat exchanger, and a first plate heat exchanger, where an outlet of the compressor is in communication with an inlet of the indoor condenser, an outlet of the indoor condenser is in communication with an inlet of the outdoor heat exchanger selectively through a first throttle branch or a first through-flow branch, an outlet of the outdoor heat exchanger, selectively through a second throttle branch or a second through-flow branch, is in communication with a first end of a first branch that is selectively open or closed and is in communication with a first end of second branch that is selectively open or closed, a second end of the first branch is in communication with a low-pressure air inlet of the compressor, a second end of the second branch is in communication with an inlet of the indoor evaporator, an outlet of the indoor evaporator is in communication with the low-pressure air inlet of the compressor, the outlet of the indoor condenser is further in communication with the inlet of the outdoor heat exchanger through a first enthalpy-increased branch that is selectively open or closed, the outlet of the outdoor heat exchanger is further in communication with a moderate-pressure air inlet of the compressor through a second enthalpy-increased branch, the first enthalpy-increased branch and the second enthalpy-increased branch exchange heat by using the first plate heat exchanger, the second enthalpy-increased branch is provided with a first expansion valve, and the outlet of the outdoor heat exchanger is in communication with the first plate heat exchanger through the first expansion valve.

According to an embodiment of this disclosure, the first branch is provided with a first switch valve.

According to an embodiment of this disclosure, the second branch is provided with a second switch valve.

According to an embodiment of this disclosure, the heat pump air-conditioning system further includes a first three-way valve, the outlet of the outdoor heat exchanger is in communication with an inlet of the first three-way valve selectively through the second throttle branch or the second through-flow branch, a first outlet of the first three-way valve is in communication with the first end of the first branch, and a second outlet of the first three-way valve is in communication with the first end of the second branch.

According to an embodiment of this disclosure, the outlet of the indoor evaporator is in communication with the low-pressure air inlet of the compressor through a one-way valve.

According to an embodiment of this disclosure, the first enthalpy-increased branch is provided with a third switch valve, and the outlet of the indoor condenser is in communication with the first plate heat exchanger through the third switch valve.

According to an embodiment of this disclosure, the first through-flow branch is provided with a fourth switch valve, and the first throttle branch is provided with a second expansion valve.

According to an embodiment of this disclosure, the heat pump air-conditioning system further includes a first expansion switch valve, an inlet of the first expansion switch valve is in communication with the outlet of the indoor condenser, an outlet of the first expansion switch valve is in communication with the inlet of the outdoor heat exchanger, the first throttle branch is a throttle passage of the first expansion switch valve, and the first through-flow branch is a through-flow passage of the first expansion switch valve.

According to an embodiment of this disclosure, the second through-flow branch is provided with a fifth switch valve, and the second throttle branch is provided with a third expansion valve.

According to an embodiment of this disclosure, the heat pump air-conditioning system is applied to an electric vehicle, and the heat pump air-conditioning system further includes a second plate heat exchanger, where the second plate heat exchanger is disposed inside the second through-flow branch, and the second plate heat exchanger is also disposed inside a motor cooling system of the electric vehicle.

According to an embodiment of this disclosure, a refrigerant inlet of the second plate heat exchanger is in communication with the outlet of the outdoor heat exchanger, and a refrigerant outlet of the second plate heat exchanger is in communication with an inlet of the fifth switch valve.

According to an embodiment of this disclosure, the motor cooling system includes a motor, a motor heat dissipator, and a water pump that are connected in series to the second plate heat exchanger to form a loop.

According to an embodiment of this disclosure, the heat pump air-conditioning system further includes a second expansion switch valve, an inlet of the second expansion switch valve is in communication with the outlet of the outdoor heat exchanger, an outlet of the second expansion switch valve is in communication with the first end of the first branch that is selectively open or closed and is in communication with the first end of the second branch that is selectively open or closed, the second throttle branch is a throttle passage of the second expansion switch valve, and the second through-flow branch is a through-flow passage of the second expansion switch valve.

According to an embodiment of this disclosure, the heat pump air-conditioning system is applied to an electric vehicle, and the heat pump air-conditioning system further includes: a second plate heat exchanger, where a refrigerant inlet of the second plate heat exchanger is in communication with the outlet of the second expansion switch valve, a refrigerant outlet of the second plate heat exchanger is in communication with the first end of the first branch that is selectively open or closed and is in communication with the first end of the second branch that is selectively open or closed, and the second plate heat exchanger is also disposed inside a motor cooling system of the electric vehicle.

According to an embodiment of this disclosure, the motor cooling system includes a coolant trunk, a first coolant branch, and a second coolant branch, a first end of the coolant trunk is selectively in communication with a first end of the first coolant branch or a first end of the second coolant branch, and a second end of the first coolant branch and a second end of the second coolant branch are in communication with a second end of the coolant trunk, where a motor, a motor heat dissipator, and a water pump are connected in series to the coolant trunk, and the second plate heat exchanger is connected in series to the first coolant branch.

According to an embodiment of this disclosure, the heat pump air-conditioning system further includes a gas-liquid separator, the outlet of the indoor evaporator is in communication with an inlet of the gas-liquid separator, the second end of the first branch is in communication with the inlet of the gas-liquid separator, and an outlet of the gas-liquid separator is in communication with the low-pressure air inlet of the compressor.

According to an embodiment of this disclosure, the heat pump air-conditioning system further includes a PTC heater, and the PTC heater is used for heating air flowing through the indoor condenser.

According to an embodiment of this disclosure, the PTC heater is disposed on a windward side or a leeward side of the indoor condenser.

According to a second aspect of this disclosure, an electric vehicle is provided. The electric vehicle includes the heat pump air-conditioning system according to the first aspect.

The heat pump air-conditioning system provided in this disclosure can implement refrigerating and heating functions of the vehicle air-conditioning system and a defrosting function of the outdoor exchanger without changing a refrigerant circulation direction, and also a simultaneous refrigerating and heating requirement can be satisfied. In a bypass defrosting process of the outdoor heat exchanger, an in-vehicle heating requirement can still be satisfied. In addition, because the heat pump air-conditioning system of this disclosure employs only one outdoor heat exchanger, air resistance against a front end module of a vehicle can be reduced, problems, such as low heating energy efficiency, impossibility in satisfying regulatory requirements for defrosting and defogging, and complex installation, of a vehicle heat pump air-conditioning system of a pure electric vehicle without an excess engine heat circulation system or a hybrid electric vehicle in electric-only mode are resolved, and effects of reducing energy consumption, simplifying a system structure, and facilitating pipeline arrangement are achieved. In addition, in this disclosure, disposing an enthalpy-increased branch in the system can significantly improve low-temperature heating performance of the system. The heat pump air-conditioning system provided in this disclosure features a simple structure, and therefore, can be easily mass produced.

Other features and advantages of this disclosure are described in detail in the Detailed Description part below.

### BRIEF DESCRIPTION OF THE DRAWINGS

Accompanying drawings are used to provide further understanding on this disclosure, constitute a part of this specification, and are used, together with the following specific implementations, to explain this disclosure, but do not constitute limitations to this disclosure, wherein:
FIG. 1A is a schematic structural diagram of a heat pump air-conditioning system according to an implementation of this disclosure;
FIG. 1B is a schematic structural diagram of a heat pump air-conditioning system according to another implementation of this disclosure;
FIG. 2 is a schematic structural diagram of a heat pump air-conditioning system according to another implementation of this disclosure;
FIG. 3 is a schematic structural diagram of a heat pump air-conditioning system according to another implementation of this disclosure;
FIG. 4 is a schematic structural diagram of a heat pump air-conditioning system according to another implementation of this disclosure;
FIG. 5A is a schematic structural diagram of a heat pump air-conditioning system according to another implementation of this disclosure;
FIG. 5B is a schematic structural diagram of a heat pump air-conditioning system according to another implementation of this disclosure;
FIG. 6 is a schematic structural diagram of a heat pump air-conditioning system according to another implementation of this disclosure;
FIG. 7 is a schematic top structural view of an expansion switch valve according to a preferred implementation of this disclosure;
FIG. 8 is a schematic sectional structural view along a midline AB-AB in FIG. 7, where a first valve port and a second valve port are both in an open state;
FIG. 9 is a schematic front structural view of an expansion switch valve from a perspective according to a preferred implementation of this disclosure;
FIG. 10 is a schematic sectional structural view along a midline AB-AB in FIG. 7, where a first valve port is in an open state, and a second valve port is in a closed state;
FIG. 11 is a schematic sectional structural view along a midline AB-AB in FIG. 7, where a first valve port is in a closed state, and a second valve port is in an open state;
FIG. 12 is a schematic front structural view of an expansion switch valve from another perspective according to a preferred implementation of this disclosure;
FIG. 13 is a schematic sectional structural view along a midline AC-AC in FIG. 12, where a first valve port is in an open state, and a second valve port is in a closed state;
FIG. 14 is a first schematic internal structural diagram of an expansion switch valve according to a preferred implementation of this disclosure, where a first valve port and a second valve port are both in an open state;
FIG. 15 is a partial enlarged diagram of a part A in FIG. 14;
FIG. 16 is a second schematic internal structural diagram of an expansion switch valve according to a preferred implementation of this disclosure, where a first valve port is in an open state, and a second valve port is in a closed state; and
FIG. 17 is a third schematic internal structural diagram of an expansion switch valve according to a preferred implementation of this disclosure, where a first valve port is in a closed state, and a second valve port is in an open state.

### DETAILED DESCRIPTION

Specific implementations of this disclosure are described in detail below with reference to the accompanying drawings. It should be understood that the specific implementations described herein are merely used to describe and explain this disclosure rather than limit this disclosure.

In this disclosure, unless contrarily described, the used locality terms, such as "up, down, left, and right", are usually relative to graphical directions of the accompanying drawings. "Upstream and downstream" are relative to a flowing direction of a medium such as a refrigerant. Specifically, being in a direction the same as a flowing direction of the refrigerant is being downstream, and being in a direction opposite to the flowing direction of the refrigerant is being upstream. "Inside and outside" indicate being inside and outside a contour of a component.

In addition, in this disclosure, an electric vehicle may be a pure electric vehicle, a hybrid electric vehicle, and a fuel cell vehicle.

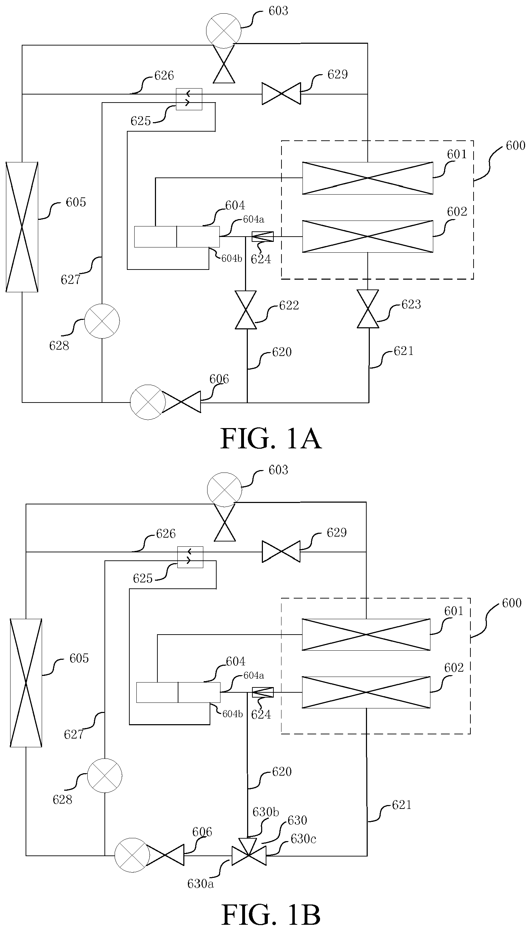

FIG. 1A and FIG. 1B are schematic structural diagrams of a heat pump air-conditioning system according to an implementation of this disclosure. As shown in FIG. 1A, the system may include: a Heating Ventilation and Air Conditioning (HVAC) assembly 600, a compressor 604, and an outdoor heat exchanger 605. The HVAC assembly 600 may include an indoor condenser 601 and an indoor evaporator 602.

In addition, as shown in FIG. 1A, an outlet of the compressor 604 is in communication with an inlet of the indoor condenser 601, an outlet of the indoor condenser 601 is in communication with an inlet of the outdoor heat exchanger 605 selectively through a first throttle branch or a first through-flow branch, an outlet of the outdoor heat exchanger 605, selectively through a second throttle branch or a second through-flow branch, is in communication with a first end of a first branch 620 that is selectively open or closed and is in communication with a first end of a second branch 621 that is selectively open or closed, a second end of the first branch 620 is in communication with an low-pressure air inlet 604a of the compressor 604, a second end of the second branch 621 is in communication with an inlet of the indoor evaporator 602, and an outlet of the indoor evaporator 602 is in communication with the low-pressure air inlet 604a of the compressor 604. The outlet of the indoor condenser 601 is further in communication with the inlet of the outdoor heat exchanger 605 through a first enthalpy-increased branch 626 that is selectively open or closed, the outlet of the outdoor heat exchanger 605 is further in communication with a moderate-pressure air inlet 604b of the compressor 604 through a second enthalpy-increased branch 627, the first enthalpy-increased branch 626 and the second enthalpy-increased branch 627 exchange heat by using the first plate heat exchanger 625, the second enthalpy-increased branch 627 is provided with a first expansion valve 628, and the outlet of the outdoor heat exchanger 605 is in communication with the first plate heat exchanger 625 through the first expansion valve 628. The first enthalpy-increased branch 626 and the second enthalpy-increased branch 627 are open in ultra-low-temperature heating mode, and can significantly improve performance of the system in an ultra-low-temperature environment.

Specifically, the first enthalpy-increased branch 626 may be provided with a third switch valve 629, the outlet of the indoor condenser 601 is in communication with the first plate heat exchanger 625 through the third switch valve 629. That is, the first enthalpy-increased branch 626 is open or closed under the control of the third switch valve 629. It should be also noted that the second enthalpy-increased branch 627 is provided with a first expansion valve 628, and the first expansion valve 628 can open or close the second enthalpy-increased branch 627 by adjusting an opening degree.

In this disclosure, the first branch 620 and the second branch 621 may be selectively open or closed according to actual requirements. For example, as shown in FIG. 1A, the first branch 620 is provided with a first switch valve 622, when the first switch valve 622 is open, the first branch 620 is open, and when the first switch valve 622 is closed, the first branch 620 is closed. In addition, the second branch 621 is provided with a second switch valve 623, when the second switch valve 623 is open, the second branch 621 is open, and when the second switch valve 623 is closed, the second branch 621 is closed.

In another implementation, as shown in FIG. 1B, the heat pump air-conditioning system may further include a first three-way valve 630, the outlet of the outdoor heat exchanger 605 is in communication with an inlet 630a of the first three-way valve 630 selectively through the second throttle branch or the second through-flow branch, a first outlet 630b of the first three-way valve 630 is in communication with the first end of the first branch 620, and a second outlet 630c of the first three-way valve 630 is in communication with the first end of the second branch 621. In this way, opening or closure of the first branch 620 and opening or closure of the second branch 621 can be controlled by using the first three-way valve 630.

For example, by controlling the first three-way valve 630 to have a way from the inlet 630a to the first outlet 630b open and a way from the inlet 630a to the second outlet 629c closed, the first branch 620 can be controlled to be open and the second branch 621 can be controlled to be closed; and by controlling the first three-way valve 630 to have the way from the inlet 630a to the first outlet 630b closed and the way from the inlet 630a to the second outlet 630c open, the first branch 620 can be controlled to be closed and the second branch 621 can be controlled to be open.

In addition, to prevent the refrigerant from flowing back to the indoor evaporator 602 when the first branch 620 is open, optionally, as shown in FIG. 1A and FIG. 1B, the outlet of the indoor evaporator 602 is in communication with the compressor 604 through a one-way valve 624. In this way, the refrigerant is allowed to only flow from the indoor evaporator 602 to the compressor 604, and cannot flow toward an opposite direction.

In this disclosure, the outlet of the indoor condenser 601 is in communication with the inlet of the outdoor heat exchanger 605 through either the first throttle branch or the first through-flow branch. Such a communication manner can be implemented in various manners. For example, in an implementation, as shown in FIG. 1A and FIG. 1B, the heat pump air-conditioning system may further include a first expansion switch valve 603, an inlet of the first expansion switch valve 603 is in communication with the outlet of the indoor condenser 601, and an outlet of the first expansion switch valve 603 is in communication with the inlet of the outdoor heat exchanger 605, where the first throttle branch is a throttle passage of the first expansion switch valve 603, and the first through-flow branch is a through-flow passage of the first expansion switch valve 603.

In this disclosure, the expansion switch valve is a valve having both an expansion valve function (also referred to as an electronic expansion valve function) and a switch valve function (also referred to as an electromagnetic valve function), and may be considered as a combination of a switch valve and an expansion valve. A through-flow passage and a throttle passage are formed inside the expansion switch valve, and when the expansion switch valve is used as a switch valve, the through-flow passage inside it is open, and in this case a through-flow branch is formed; and when the expansion switch valve is used as an expansion valve, a throttle passage inside it is open, and in this case, a throttle branch is formed.

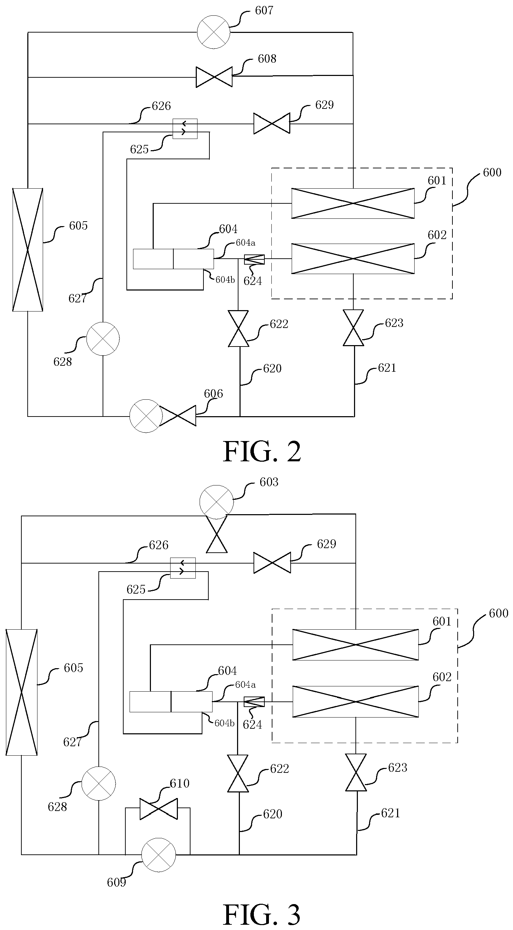

In another alternative implementation, as shown in FIG. 2, the heat pump air-conditioning system may further include a fourth switch valve 608 and a second expansion valve 607, where the fourth switch valve 608 is disposed on the first through-flow branch, and the second expansion valve 607 is disposed on the first throttle branch. Specifically, as shown in FIG. 2, the outlet of the indoor condenser 601 is in communication with the inlet of the outdoor heat exchanger 605 through the fourth switch valve 608 to form the first through-flow branch, and the outlet of the indoor condenser 601 is in communication with the inlet of the outdoor heat exchanger 605 through the second expansion valve 607 to form the first throttle branch. When the system is in high-temperature refrigerating mode, the fourth switch valve 608 is open, the second expansion valve 607 is closed, and the outlet of the indoor condenser 601 is in communication with the inlet of the outdoor heat exchanger 605 through the first through-flow branch. When the system is in low-temperature heating mode, the second expansion valve 607 is open, the fourth switch valve 608 is closed, and the outlet of the indoor condenser 601 is in communication with the inlet of the outdoor heat exchanger 605 through the first throttle branch.

Similar to the implementations of the first through-flow branch and the first throttle branch, in one of the implementations of the second through-flow branch and the second throttle branch, as shown in FIG. 1A and FIG. 1B, the heat pump air-conditioning system may further include a second expansion switch valve 609, an inlet of the second expansion switch valve 606 is in communication with the outlet of the outdoor heat exchanger 605, an outlet of the second expansion switch valve 606 is in communication with the first end of the first branch 620 that is selectively open or closed and is in communication with the first end of the second branch 621 that is selectively open or closed, where the second throttle branch is a throttle passage of the second expansion switch valve 606, and the second through-flow branch is a through-flow passage of the second expansion switch valve 606.

In another alternative implementation, as shown in FIG. 3, the heat pump air-conditioning system may further include a fifth switch valve 610 and a third expansion valve 609, where the fifth switch valve 610 is disposed on the second through-flow branch, and the third expansion valve 609 is disposed on the second throttle branch. Specifically, as shown in FIG. 3, the outlet of the outdoor heat exchanger 605, through the fifth switch valve 610, is in communication with the first end of the first branch 620 that is selectively open or closed and is in communication with the first end of the second branch 621 that is selectively open or closed to form a second through-flow branch, and the outlet of the outdoor heat exchanger 605, through the third expansion valve 609, is in communication with the first end of the first branch 620 that is selectively open or closed and is in communication with the first end of the second branch 621 that is selectively open or closed to form a second throttle branch. When the system is in high-temperature refrigerating mode, the third expansion valve 609 is open, the fifth switch valve 610 is closed, and the outlet of the outdoor heat exchanger 605, through the second throttle branch, is in communication with the first end of the first branch 620 that is closed and is in communication with the first end of the second branch 621 that is open. When the system is in low-temperature heating mode, the fifth switch valve 610 is open, the third expansion valve 609 is closed, and the outlet of the outdoor heat exchanger 605, through the second through-flow branch, is in communication with the first end of the first branch 620 that is open and is in communication with the first end of the second branch 621 that is closed.

To facilitate pipeline arrangement and save occupied space, preferably, the first expansion switch valve 603 and the second expansion switch valve 606, that is, implementations shown in FIG. 1A and FIG. 1B, are used in the heat pump air-conditioning system provided in this disclosure.

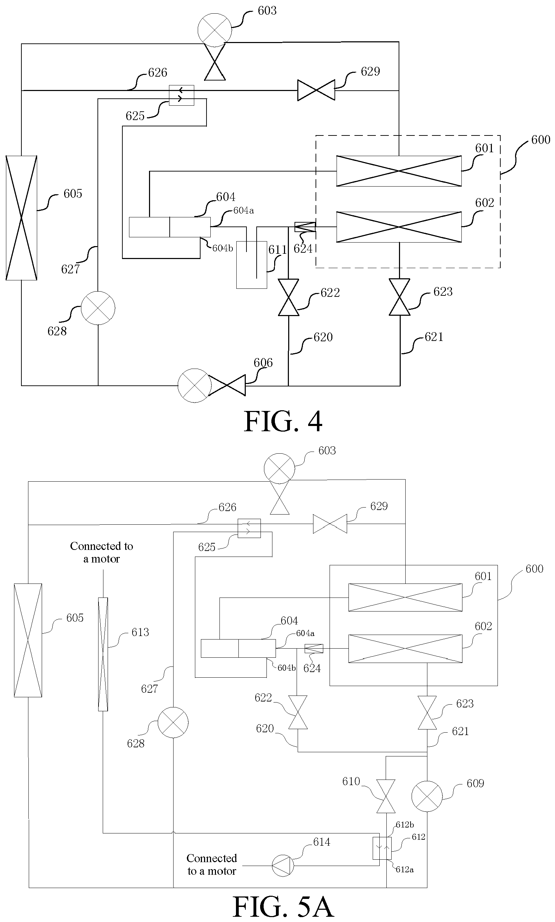

FIG. 4 is a schematic structural diagram of a heat pump air-conditioning system according to another implementation of this disclosure. As shown in FIG. 4, the heat pump air-conditioning system may further include a gas-liquid separator 611, where the outlet of the indoor evaporator 602 is in communication with an inlet of the gas-liquid separator 611, the second end of the first branch 620 is in communication with the inlet of the gas-liquid separator 611, and an outlet of the gas-liquid separator 611 is in communication with the low-pressure air inlet 604a of the compressor 604. In this way, a refrigerant flowing out through the indoor evaporator 602 or the second end of the first branch 620 can first pass through the gas-liquid separator 611 to be subject to gas-liquid separation, and the separated gas flows back to the compressor 604, to prevent the liquid refrigerant from entering the compressor 604 and damaging the compressor 604, so that a service life of the compressor 604 can be prolonged, and efficiency of the entire heat pump air-conditioning system can be improved.

FIG. 4 is used as an example below to specifically describe circulation processes and principles of the heat pump air-conditioning system provided in this disclosure in different working modes. It should be understood that circulation processes and principles of the system in other implementations (for example, the implementations shown in FIG. 1A to FIG. 3) are similar to those in FIG. 4, and details are not described herein again.

Mode 1: High-temperature refrigerating mode. When the system is in this mode, the entire system forms a high-temperature refrigerating circulation system. As shown in FIG. 4, first, the compressor 604 discharges a high-temperature high-pressure gas by means of compression, and the compressor 604 is connected to the indoor condenser 601. In this case, air is controlled to not pass through the indoor condenser 601, because no air passes, heat exchange is not performed inside the indoor condenser 601, and the indoor condenser 601 is merely used as a passage. In this case, the high-temperature high-pressure gas remains unchanged at the outlet of the indoor condenser 601. The outlet of the indoor condenser 601 is in communication with the inlet of the first expansion switch valve 603. In this case, the first expansion switch valve 603 implements a switch valve function, and is merely used as a passage, and the high-temperature high-pressure gas remains unchanged at the outlet of the first expansion switch valve 603. The outlet of the first expansion switch valve 603 is in communication with the inlet of the outdoor heat exchanger 605, the outdoor heat exchanger 605 exchanges heat with outdoor air, and dissipates heat into air, and a moderate-temperature high-pressure liquid is generated at the outlet of the outdoor heat exchanger 605. The outlet of the outdoor heat exchanger 605 is in communication with the inlet of the second expansion switch valve 606. In this case, the second expansion switch valve 606 implements an expansion valve function, and implements a throttle function as a throttle element, and a low-temperature low-pressure liquid is generated at the outlet thereof. An opening degree of the second expansion switch valve 606 may be set according to actual requirements, and the opening degree may be adjusted by calculating a superheat degree of the refrigerant at the outlet of the evaporator according to pressure and temperature data collected by a pressure-temperature sensor mounted between the outlet of the indoor evaporator 602 and the inlet of the gas-liquid separator 611. The first switch valve 622 is closed, and the second switch valve 623 is open. In this way, the first branch 620 is closed, and the second branch 621 is open. The low-temperature low-pressure liquid from the second expansion switch valve 606 enters the indoor evaporator 602 to be evaporated, so that a low-temperature low-pressure gas is generated at the outlet of the indoor evaporator 602. The indoor evaporator 602 is connected to the gas-liquid separator 611, the liquid that is not evaporated is separated by the gas-liquid separator 611, and finally, a low-temperature low-pressure gas returns to the compressor 604 through the low-pressure air inlet 604a of the compressor 604, so that a cycle is formed. In this case, the air in the HVAC assembly 600 only flows through the indoor evaporator 602, and no air passes through the indoor condenser 601, and the indoor condenser 601 is merely used as a refrigerant passage. In addition, both of the third switch valve 629 and the first expansion valve 628 are closed, so that the first enthalpy-increased branch 626 and the second enthalpy-increased branch 627 are both closed.

Mode 2: Low-temperature heating mode. When the system is in this mode, the entire system forms a low-temperature heating circulation system. As shown in FIG. 4, first, the compressor 604 discharges a high-temperature high-pressure gas by means of compression, the compressor 604 is connected to the indoor condenser 601, and the high-temperature high-pressure gas is condensed in the indoor condenser 601, so that a moderate-temperature high-pressure liquid is generated at the outlet of the indoor condenser 601. The outlet of the indoor condenser 601 is in communication with the inlet of the first expansion switch valve 603. In this case, the first expansion switch valve 603 implements an expansion valve function, and implements a throttle function as a throttle element, and a low-temperature low-pressure liquid is generated at the outlet thereof. An opening degree of the first expansion switch valve 603 may be set according to actual requirements, and the opening degree may be adjusted according to temperature data (that is, a discharge temperature of the compressor) collected by a pressure-temperature sensor mounted at the outlet of the compressor 604. The outlet of the first expansion switch valve 603 is in communication with the inlet of the outdoor heat exchanger 605, the outdoor heat exchanger 605 absorbs heat from outdoor air, and a low-temperature low-pressure gas is generated at the outlet of the outdoor heat exchanger 605. The outlet of the outdoor heat exchanger 605 is in communication with the inlet of the second expansion switch valve 606. In this case, the second expansion switch valve 606 implements a switch valve function, and is merely used as a passage. The first switch valve 622 is open, and the second switch valve 623 is closed. In this way, the first branch 620 is open, and the second branch 621 is closed. The low-temperature low-pressure gas from the second expansion switch valve 606 directly enters the gas-liquid separator 611, the liquid that is not evaporated is separated by the gas-liquid separator 611, and finally, a low-temperature low-pressure gas returns to the compressor 604 through the low-pressure air inlet 604a of the compressor 604, so that a cycle is formed. In this case, both of the third switch valve 629 and the first expansion valve 623 are closed, so that the first enthalpy-increased branch 626 and the second enthalpy-increased branch 627 are both closed.

Based on an existing HVAC air box design, if air needs to be controlled to pass through the indoor condenser 601, air needs to enter the indoor condenser 601 after passing through the indoor evaporator 602. However, in the heating mode, heat exchange cannot be performed in the indoor evaporator 602. Therefore, the first branch 620 is open, and the second branch 621 is closed, so that in the indoor evaporator 602 is shorted out. Although air passes through the indoor evaporator 602, the temperature of the refrigerant is not affected.

Mode 3: Ultra-low-temperature heating mode. When the system is in this mode, the entire system forms an ultra-low-temperature heating circulation system. As shown in FIG. 4, based on the foregoing low-temperature heating mode, the third switch valve 629 and the first expansion valve 628 are open, so that the first enthalpy-increased branch 626 and the second enthalpy-increased branch 627 are both open. In this way, the moderate-temperature high-pressure liquid flowing from the outlet of the indoor condenser 601 is divided into two flows, one is throttled by the first expansion switch valve 603 and changes into a low-temperature low-pressure liquid to enter the outdoor heat exchanger 605, and the other is converted by the third switch valve 629 and the first plate heat exchanger 625 into a low-temperature high-pressure liquid to enter the outdoor heat exchanger 605. The refrigerant from the outdoor heat exchanger 605 is a mixture of a low-temperature low-pressure gas and a low-temperature high-pressure liquid. The low-temperature low-pressure gas enters the low-pressure air inlet 604a of the compressor 604 through the second expansion switch valve 606, the first switch valve 622, and the gas-liquid separator 611, so that a cycle is formed. The low-temperature high-pressure liquid is throttled by the first expansion valve 628 to change into a low-temperature moderate-pressure liquid, and the low-temperature moderate-pressure liquid is converted by the first plate heat exchanger 625 into a moderate-temperature moderate-pressure gas to enter the moderate-pressure air inlet 604b of the compressor 604, so that a cycle is formed. In view of this, in a process during which the refrigerant on the second enthalpy-increased branch 627 passes through the first plate heat exchanger 625, the refrigerant on the second enthalpy-increased branch 627 absorbs heat from the refrigerant on the first enthalpy-increased branch 626, so that a suction temperature and a suction amount of the compressor 604 can be improved, and heating performance of the system is improved.

Mode 4: Simultaneous refrigerating and heating mode. When the system is in this mode, the entire system forms a simultaneous refrigerating and heating circulation system. As shown in FIG. 4, first, the compressor 604 discharges a high-temperature high-pressure gas by means of compression, the compressor 604 is connected to the indoor condenser 601, and the high-temperature high-pressure gas is condensed in the indoor condenser 601, so that a moderate-temperature high-pressure liquid is generated at the outlet of the indoor condenser 601. The outlet of the indoor condenser 601 is in communication with the inlet of the first expansion switch valve 603. In this case, the first expansion switch valve 603 implements an expansion valve function, and implements a throttle function as a throttle element, and a low-temperature low-pressure liquid is generated at the outlet thereof. An opening degree of the first expansion switch valve 603 may be set according to actual requirements, and the opening degree may be adjusted according to temperature data, that is, a discharge temperature of the compressor, collected by a pressure-temperature sensor mounted at the outlet of the compressor 604. The outlet of the first expansion switch valve 603 is in communication with the inlet of the outdoor heat exchanger 605, the low-temperature low-pressure liquid is remains unchanged at the outdoor heat exchanger 605, and the low-temperature low-pressure state of the liquid is kept at the outlet thereof through incomplete evaporation. The outlet of the outdoor heat exchanger 605 is in communication with the inlet of the second expansion switch valve 606. In this case, the second expansion switch valve 606 implements an expansion valve function, and performs throttling again as a throttle element. The first switch valve 622 is closed, and the second switch valve 623 is open. In this way, the first branch 620 is closed, and the second branch 621 is open. The low-temperature low-pressure liquid from the second expansion switch valve 606 enters the indoor evaporator 602 to be evaporated, so that a low-temperature low-pressure gas is generated at the outlet of the indoor evaporator 602. The indoor evaporator 602 is connected to the gas-liquid separator 611, the liquid that is not evaporated is separated by the gas-liquid separator 611, and finally, a low-temperature low-pressure gas returns to the compressor 604 through the low-pressure air inlet 604a of the compressor 604, so that a cycle is formed. In this case, in the HVAC assembly 600, air flows through both the indoor condenser 601 and the indoor evaporator 602.

Mode 5: Outdoor heat exchanger defrosting mode. As shown in FIG. 4, first, the compressor 604 discharges a high-temperature high-pressure gas by means of compression, and the compressor 604 is connected to the indoor condenser 601. In this case, the indoor condenser 601 is merely used as a passage, and the high-temperature high-pressure gas remains unchanged at the outlet of the indoor condenser 601. The outlet of the indoor condenser 601 is in communication with the inlet of the first expansion switch valve 603. In this case, the first expansion switch valve 603 implements a switch valve function, and is merely used as a passage, and the high-temperature high-pressure gas remains unchanged at the outlet of the first expansion switch valve 603. The outlet of the first expansion switch valve 603 is in communication with the inlet of the outdoor heat exchanger 605, the outdoor heat exchanger 605 exchanges heat with outdoor air, and dissipates heat into air, and a moderate-temperature high-pressure liquid is generated at the outlet of the outdoor heat exchanger 605. The outlet of the outdoor heat exchanger 605 is in communication with the inlet of the second expansion switch valve 606. In this case, the second expansion switch valve 606 implements an expansion valve function, and implements a throttle function as a throttle element, and a low-temperature low-pressure liquid is generated at the outlet thereof. An opening degree of the second expansion switch valve 606 may be set according to actual requirements, and the opening degree may be adjusted by calculating a superheat degree of the refrigerant at the outlet of the evaporator according to pressure and temperature data collected by a pressure-temperature sensor mounted between the outlet of the indoor evaporator 602 and the inlet of the gas-liquid separator 611. The first switch valve 622 is closed, and the second switch valve 623 is open. In this way, the first branch 620 is closed, and the second branch 621 is open. The low-temperature low-pressure liquid from the second expansion switch valve 606 enters the indoor evaporator 602 to be evaporated, so that a low-temperature low-pressure gaseous-liquid refrigerant is generated at the outlet of the indoor evaporator 602. The indoor evaporator 602 is connected to the gas-liquid separator 611, the liquid that is not evaporated is separated by the gas-liquid separator 611, and finally, a low-temperature low-pressure gas returns to the compressor 604 through the low-pressure air inlet 604a of the compressor 604, so that a cycle is formed. In this case, ventilation of the HVAC assembly 600 does not need to be enabled.

In conclusion, the heat pump air-conditioning system provided in this disclosure can implement refrigerating and heating functions of the vehicle air-conditioning system and a defrosting function of the outdoor exchanger without changing a refrigerant circulation direction, and also a simultaneous refrigerating and heating requirement can be satisfied. In a bypass defrosting process of the outdoor heat exchanger, an in-vehicle heating requirement can still be satisfied. In addition, because the heat pump air-conditioning system of this disclosure employs only one outdoor heat exchanger, air resistance against a front end module of a vehicle can be reduced, problems, such as low heating energy efficiency, impossibility in satisfying regulatory requirements for defrosting and defogging, and complex installation, of a vehicle heat pump air-conditioning system of a pure electric vehicle without an excess engine heat circulation system or a hybrid electric vehicle in electric-only mode are resolved, and effects of reducing energy consumption, simplifying a system structure, and facilitating pipeline arrangement are achieved. The heat pump air-conditioning system provided in this disclosure features a simple structure, and therefore, can be easily mass produced. In addition, in this disclosure, disposing an enthalpy-increased branch in the system can significantly improve low-temperature heating performance of the system. The heat pump air-conditioning system provided in this disclosure features a simple structure, and therefore, can be easily mass produced.

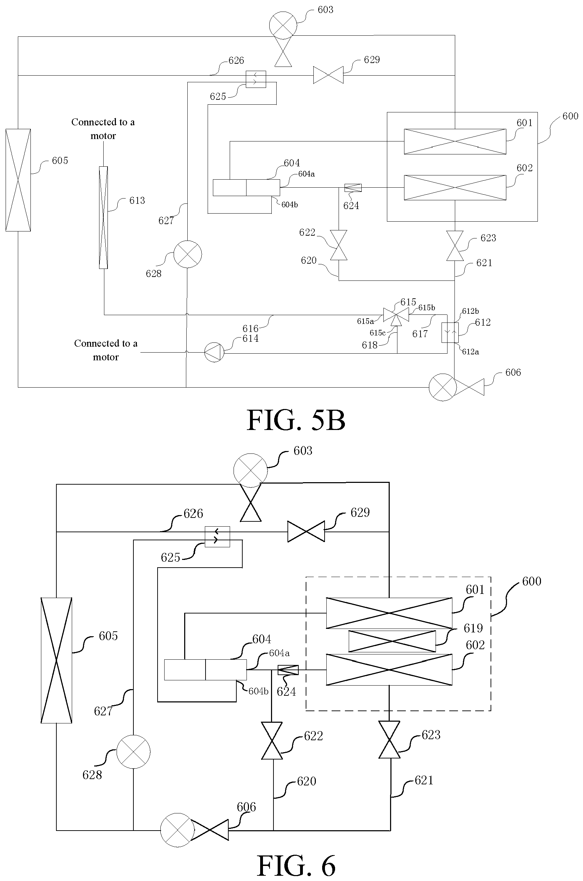

In the low-temperature heating mode, the ultra-low-temperature heating mode, and the simultaneous refrigerating and heating mode, to improve the heating capability, preferably, as shown in FIG. 5A and FIG. 5B, a second plate heat exchanger 612 is disposed inside the entire heat pump air-conditioning system, and the second plate heat exchanger 612 is also disposed inside a motor cooling system of an electric vehicle. In this way, a refrigerant of the air-conditioning system can be heated by using excess heat of the motor cooling system, thereby improving a suction temperature and a suction amount of the compressor 604.

For example, as shown in FIG. 5A, in an implementation in which the third expansion valve 609 and the fifth switch valve 610 are used in the heat pump air-conditioning system, the second plate heat exchanger 612 may be disposed inside the second through-flow branch, as shown in FIG. 5A. For example, in an implementation, a refrigerant inlet 612a of the second plate heat exchanger 612 is in communication with the outlet of the outdoor heat exchanger 605, and a refrigerant outlet 612b of the second plate heat exchanger 612 is in communication with an inlet of the fifth switch valve 610. Alternatively, in another implementation (not shown), a refrigerant inlet 612a of the second plate heat exchanger 612 may be in communication with an outlet of the fifth switch valve 610, and a refrigerant outlet 612b of the second plate heat exchanger 612 is in communication with the first end of the first branch 620 that is selectively open or closed and is in communication with the first end of the second branch 621 that is selectively open or closed.

In addition, the second plate heat exchanger 612 is also disposed inside the motor cooling system. As shown in FIG. 5A, the motor cooling system may include a motor, a motor heat dissipator 613, and a water pump 614 that are connected in series to the second plate heat exchanger 612 to form a loop. In this way, the refrigerant can perform heat exchange with a coolant in the motor cooling system by using the second plate heat exchanger 612. The refrigerant returns to the compressor 604 through the fifth switch valve 610 and the first switch valve 622.

Alternatively, as shown in FIG. 5B, in an implementation in which the second expansion switch valve 606 is used in the heat pump air-conditioning system, a refrigerant inlet 612a of the second plate heat exchanger 612 is in communication with the outlet of the second expansion switch valve 606, a refrigerant outlet 612b of the second plate heat exchanger 612 is in communication with the first end of the first branch 620 that is selectively open or closed and is in communication with the first end of the second branch 621 that is selectively open or closed, and the second plate heat exchanger 612 is also disposed inside the motor cooling system of the electric vehicle. In this way, the refrigerant can perform heat exchange with a coolant in the motor cooling system by using the second plate heat exchanger 612. The refrigerant returns to the compressor 604 through the first switch valve 622.

The heating capability of the air-conditioning system in the low-temperature heating mode, the ultra-low-temperature heating mode, and the simultaneous refrigerating and heating mode can be improved by using the second plate heat exchanger 612.

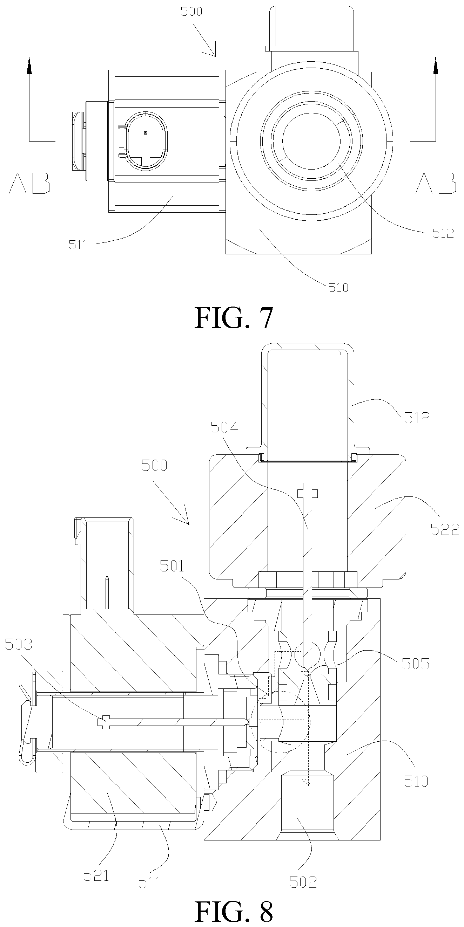

However, as shown in FIG. 5B, in the implementation in which the second expansion switch valve 606 is used in the heat pump air-conditioning system, to avoid heating the refrigerant in the high-temperature refrigerating mode and the outdoor heat exchanger defrosting mode, a valve may be used to control whether heat exchange is performed in the second plate heat exchanger 612. Specifically, the motor cooling system may include a coolant trunk 616, a first coolant branch 617, and a second coolant branch 618, a first end of the coolant trunk 616 is selectively in communication with a first end of the first coolant branch 617 or a first end of the second coolant branch 618. For example, in an implementation, the first end of the coolant trunk 616 may be in communication with an inlet 615a of a second three-way valve 615, the first end of the first coolant branch 617 may be in communication with a first outlet 615b of the second three-way valve 615, the first end of the second coolant branch 618 may be in communication with a second outlet 615c of the second three-way valve 615. Therefore, the first end of the coolant trunk 616 may be controlled, by using the second three-way valve 615, to be selectively in communication with the first end of the first coolant branch 617 or the first end of the second coolant branch 618. In addition, as shown in FIG. 7, a second end of the first coolant branch 617 is in communication with a second end of the coolant trunk 616, and a second end of the second coolant branch 618 is also in communication with the second end of the coolant trunk 616; a motor, a motor heat dissipator 613, and a water pump 614 are connected in series to the coolant trunk 616, and the second plate heat exchanger 612 is connected in series to the first coolant branch 617.

In this way, when the air-conditioning system works in the low-temperature heating mode, the ultra-low-temperature heating mode, or the simultaneous refrigerating and heating mode, to improve the heating capability, the refrigerant needs to be heated in the second plate heat exchanger 612. Therefore, in this case, the first coolant branch 617 may be open by controlling the second three-way valve 615, so that a coolant in the cooling system flows through the second plate heat exchanger 612. In this case, heat exchange with the refrigerant can be implemented. However, when the system works in the high-temperature refrigerating mode or the outdoor heat exchanger defrosting mode, the refrigerant does not need to be heated in the second plate heat exchanger 612. Therefore, in this case, the second coolant branch 618 may be open by controlling the second three-way valve 615, so that a coolant in the cooling system does not flow through the second plate heat exchanger 612. In this case, the second plate heat exchanger 612 is merely used as a passage of the refrigerant.

In the heat pump air-conditioning system provided in this disclosure, various refrigerants, such as R134a, R410a, R32, and R290, may be used. Preferably, a high-temperature refrigerant is used.

FIG. 6 is a schematic structural diagram of a heat pump air-conditioning system according to another implementation of this disclosure. As shown in FIG. 6, the heat pump air-conditioning system may further include a PTC heater 619, and the PTC heater 619 is used for heating air flowing through the indoor condenser 601.

In this disclosure, the PTC heater 619 may be a high-voltage PTC heater (which is driven by high-voltage batteries in the entire vehicle), and a voltage range is 200 V to 900 V. Alternatively, the PTC heater 619 may be a low-voltage PTC heater (which is driven by a 12 V- or 24 V-storage battery), and a voltage range is 9 V to 32 V. In addition, the PTC heater 619 may be a complete core formed by several strip-shaped or several block-shaped PTC ceramic wafer modules and a heat dissipation fin, or may be a strip-shaped or block-shaped PTC ceramic wafer module having a heat dissipation fin.

In this disclosure, the PTC heater 619 may be disposed on a windward side or a leeward side of the indoor condenser 601. In addition, to improve an effect of heating air flowing through the indoor condenser 601, the PTC heater 619 may be disposed in parallel to the indoor condenser 601. In other implementations, the PTC heater 619 may alternatively be disposed at a foot blowing air vent and a defrosting vent of a box of the HVAC assembly 600, or may be disposed at an air vent of a defrosting ventilation channel.

If the PTC heater 619 is disposed on the windward side or the leeward side of the indoor condenser 601 in the box and is disposed in parallel to the indoor condenser 601, a groove may be dug on a housing of the box, and the PTC heater 619 is perpendicularly inserted into the box; or a support may be welded on a sideboard of the indoor condenser 601, and the PTC heater 619 is fastened to the support of the indoor condenser 601 by using screws. If the PTC heater 619 is disposed at the foot blowing air vent and the defrosting vent of the box or is disposed at the air vent of the defrosting ventilation channel, the PTC heater 619 may be directly fastened to the air outlets of the box and the air vent of the ventilation channel by using screws.

According to the implementation, when the temperature outside the vehicle is too low and a heating amount in the low-temperature heating mode of the heat pump air-conditioning system cannot satisfy a requirement in the vehicle, the PTC heater 619 may be run to assist heating. Therefore, disadvantages, such as a small heating amount, slow entire-vehicle defrosting and defogging, and a poor heating effect, of the heat pump air-conditioning system in the low-temperature heating mode can be eliminated.

As described above, in this disclosure, the expansion switch valve is a valve having both an expansion valve function and a switch valve function, and may be considered as a combination of a switch valve and an expansion valve. An exemplary implementation of the expansion switch valve is provided below.

As shown in FIG. 7, the foregoing expansion switch valve may include a valve body 500, where an inlet 501, an outlet 502, and an internal passage in communication between the inlet 501 and the outlet 502 are formed on the valve body 500, a first valve plug 503 and a second valve plug 504 are mounted on the internal passage, the first valve plug 503 makes the inlet 501 and the outlet 502 in direct communication or out of communication, and the second valve plug 504 makes the inlet 501 and the outlet 502 in communication through a throttle port 505 or out of communication.

The "direct communication" implemented by the first valve plug means that the refrigerant entered from the inlet 501 of the valve body 500 can bypass the first valve plug and directly flow to the outlet 502 of the valve body 500 through the internal passage without being affected, and the "out of communication" implemented by the first valve plug means that the refrigerant entered from the inlet 501 of the valve body 500 cannot bypass the first valve plug and cannot flow to the outlet 502 of the valve body 500 through the internal passage. The "communication through a throttle port" implemented by the second valve plug means that the refrigerant entered from the inlet 501 of the valve body 500 can bypass the second valve plug and flow to the outlet 502 of the valve body 500 after being throttled by a throttle port 505, and the "out of communication" implemented by the second valve plug means that the refrigerant entered from the inlet 501 of the valve body 500 cannot bypass the second valve plug and cannot flow to the outlet 502 of the valve body 500 through the throttle port 505.

In this way, the expansion switch valve in this disclosure can achieve at least three states of the refrigerant entered from the inlet 501 by controlling the first valve plug and the second valve plug: (1) a closed state; (2) a direct communication state by bypassing the first valve plug 503; and (3) a throttled communication manner by bypassing the second valve plug 504.

After being throttled by the throttle port 505, a high-temperature high-pressure liquid refrigerant may become a low-temperature low-pressure atomized liquid refrigerant. This creates a condition for evaporation of the refrigerant. That is, a cross sectional area of the throttle port 505 is smaller than a cross sectional area of the outlet 502, and an opening degree of the throttle port 505 may be adjusted by controlling the second valve plug, to control an amount of flow passing through the throttle port 505, thereby avoiding insufficient refrigeration caused by an excessively small amount of refrigerant and avoiding a liquid slugging phenomenon in the compressor that is caused by an excessively large amount of refrigerant. That is, cooperation between the second valve plug 504 and the valve body 500 can make the expansion switch valve have the expansion valve function.

In this way, an opening/closure control function and/or a throttle control function of the inlet 501 and the outlet 502 can be implemented by mounting the first valve plug 503 and the second valve plug 504 on the internal passage of the same valve body 500. A structure is simple, and production and installation are easy. In addition, when the expansion switch valve provided in this disclosure is applied to a heat pump system, a filling amount of refrigerant of the entire heat pump system is reduced, costs are reduced, pipeline connections are simplified, and oil return of the heat pump system is facilitated.

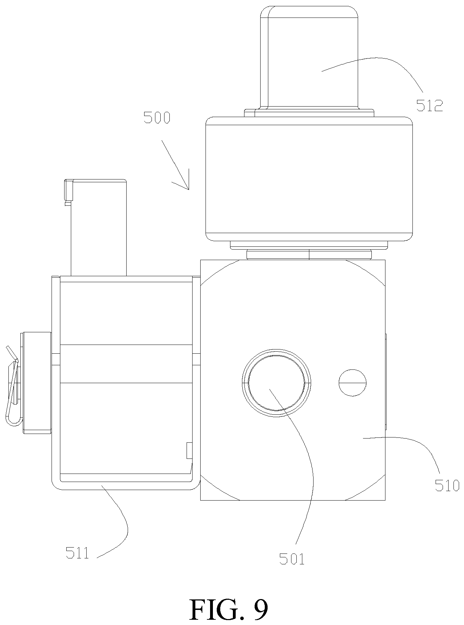

As an exemplary internal installation structure of the valve body 500, as shown in FIG. 7 to FIG. 12, the valve body 500 includes a valve base 510 that forms an internal passage and a first valve housing 511 and a second valve housing 512 that are mounted on the valve base 510. A first electromagnetic drive portion 521 used for driving the first valve plug 503 is mounted in the first valve housing 511, and a second electromagnetic drive portion 522 used for driving the second valve plug 504 is mounted in the second valve plug 504. The first valve plug 503 extends from the valve housing 511 to the internal passage inside the valve base 510, and the second valve plug 504 extends from an end proximal to the second valve housing 512 to the internal passage inside the valve base 510.

A location of the first valve plug 503 can be easily controlled by controlling power-on or power-off of the first electromagnetic drive portion 521 (for example, an electromagnetic coil), to control direct-communication or out-of-communication between the inlet 501 and the outlet 502. A location of the second valve plug 504 can be easily controlled by controlling power-on or power-off of the second electromagnetic drive portion 522 (for example, an electromagnetic coil), to control whether the inlet 501 and the outlet 502 are in communication with the throttle port 505. In other words, an electronic expansion valve and an electromagnetic valve that share the inlet 501 and the outlet 502 are connected in parallel and mounted in the valve body 500. Therefore, automated control on opening/closure and/or throttling of the expansion switch valve can be implemented, and pipeline arrangement can be simplified.

To fully use spatial locations of the expansion switch valve in different directions and avoid connections between the expansion switch valve and different pipelines from interfering with each other, the valve base 510 is of a polyhedral structure, the first valve housing 511, the second valve housing 512, the inlet 501, and the outlet 502 are respectively disposed on different surfaces of the polyhedral structure, installation directions of the first valve housing 511 and the second valve housing 512 are perpendicular to each other, and opening directions of the inlet 501 and the outlet 502 are perpendicular to each other. In this way, inlet and outlet pipelines can be connected to the different surfaces of the polyhedral structure, thereby avoiding a problem of disordered and twisted pipeline arrangement.

As a typical internal structure of the expansion switch valve, as shown in FIG. 7 to FIG. 10, the internal passage includes a first passage 506 and a second passage 507 that are separately in communication with the inlet 501, a first valve port 516 fitting the first valve plug 503 is formed on the first passage 506, the throttle port 505 is formed on the second passage 507 to form a second valve port 517 fitting the second valve plug 504, and the first passage 506 and the second passage 507 converge downstream of the second valve port 517 and are in communication with the outlet 502.

That is, the first valve port 516 is closed or opened by changing the location of the first valve plug 503, to control closure or opening of the first passage 506 in communication between the inlet 501 and the outlet 502, thereby implementing the opening or closure function of the electromagnetic valve described above. Similarly, the second valve port 517 is open or closed by changing the location of the second valve plug 504, thereby implementing the throttle function of the electronic expansion valve.

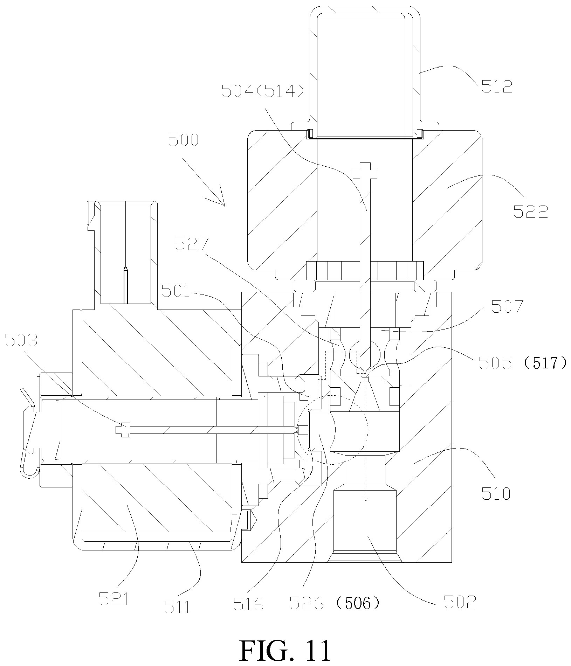

The first passage 506 and the second passage 507 can be respectively in communication with the inlet 501 and the outlet 502 in any suitable arrangement manner. To reduce an overall occupied space of the valve body 500, as shown in FIG. 11, the second passage 507 and the outlet 502 are provided toward a same direction, the first passage 506 is formed as a first through hole 526 perpendicular to the second passage 507, the inlet 501 is in communication with the second passage 507 through a second through hole 527 provided on a sidewall of the second passage 507, and the first through hole 526 and the second through hole 527 are respectively in communication with the inlet 501. The first through hole 526 and the second through hole 527 are spatially disposed perpendicularly to each other or in parallel to each other. This is not limited in this disclosure, and belongs to the protection scope of this disclosure.

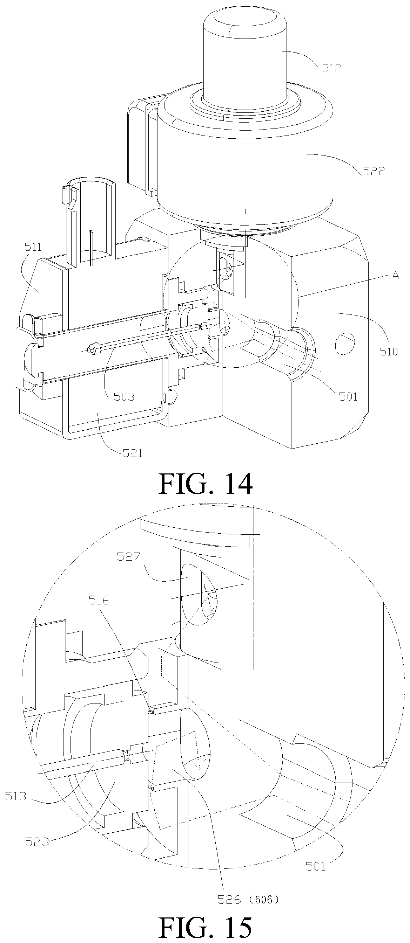

To further reduce the overall occupied space of the valve body 500, as shown in FIG. 14 to FIG. 17, the inlet 501 and the outlet 502 are provided on the valve body 500 perpendicularly to each other. In this way, as shown in FIG. 14 to FIG. 16, every two of an axis of the inlet 501, an axis of the outlet 502 (that is, an axis of the second passage 507), and an axis of the first passage 506 are set perpendicularly to each other, to avoid interference caused by movements of the first valve plug 503 and the second valve plug 504, and maximize utilization of an inner space of the valve body 500.

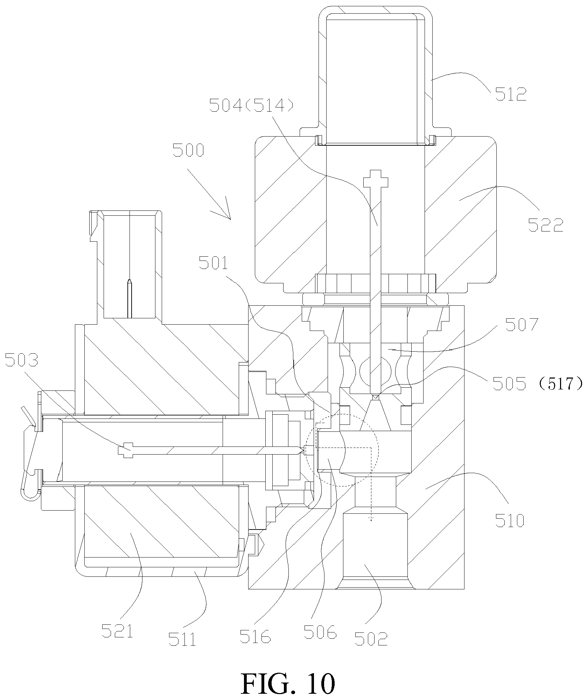

As shown in FIG. 10 and FIG. 11, to easily close and open the first valve port 516, the first valve plug 503 is disposed coaxially with the first valve port 516 along a moving direction, to selectively plug up or detach from the first valve port 516.

To easily close and open the second valve port 517, the second valve plug 504 is disposed coaxially with the second valve port 517 along a moving direction, to selectively plug up or detach from the second valve port 517.

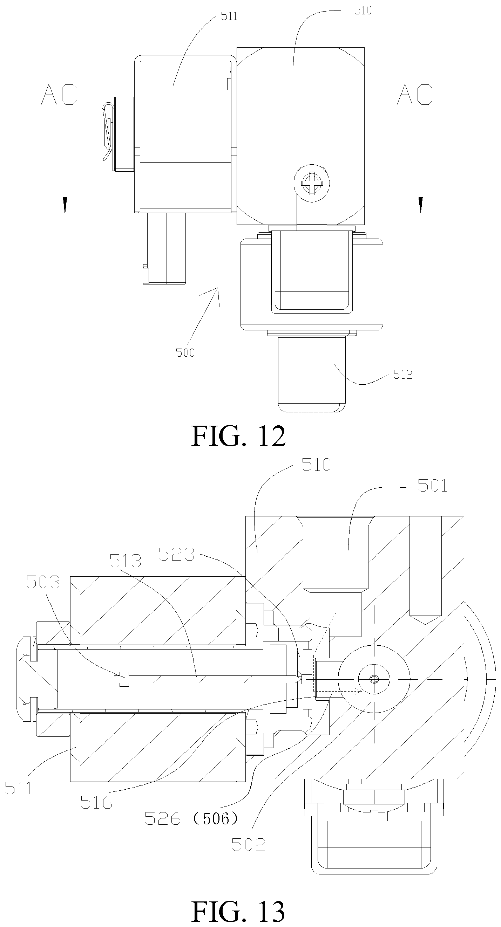

As shown in FIG. 13, to ensure reliability of plugging up the first passage 506 by using the first valve plug 503, the first valve plug 503 may include a first valve stem 513 and a first plug 523 connected to an end portion of the first valve stem 513, and the first plug 523 is used for pressing against an end face of the first valve port 516 in a sealing manner to plug up the first passage 506.

To easily adjust the opening degree of the throttle port 505 of the expansion switch valve, as shown in FIG. 10 and FIG. 11, the second valve plug 504 includes a second valve stem 514, an end portion of the second valve stem 514 is formed as a conical head structure, and the second valve port 517 is formed as a conical hole structure fitting the conical head structure.

The opening degree of the throttle port 505 of the expansion switch valve may be adjusted by moving the second valve plug 504 upward and downward, and the upward and downward moving of the second valve plug 504 may be adjusted by using the second electromagnetic drive portion 522. If the opening degree of the throttle port 505 of the expansion switch valve is zero, as shown in FIG. 10, the second valve plug 504 is located at a lowest location, the second valve plug 504 plugs up the second valve port 517, and none of the refrigerant can pass through the throttle port 505, that is, the second valve port 517. If the throttle port 505 of the expansion switch valve has an opening degree, as shown in FIG. 11, there is a gap between the conical head structure of the end portion of the second valve plug 504 and the throttle port 505, and the refrigerant flows to the outlet 502 after being throttled. If the opening degree of the throttle port 505 of the expansion switch valve needs to be increased, the second electromagnetic drive portion 522 may be controlled to move the second valve plug 504 upward, to make the conical head structure depart from the throttle port 505, so that the opening degree of the throttle port 505 is increased. In contrast, when the opening degree of the throttle port 505 of the expansion switch valve needs to be decreased, the second valve plug 504 may be driven to move downward.

During use, when only the electromagnetic valve function of the expansion switch valve needs to be used, as shown in FIG. 10, FIG. 13, and FIG. 16, the first valve plug 503 detaches from the first valve port 516, the first valve port 516 is in an open state, the second valve plug 504 is located at a lowest location, and the second valve plug 504 plugs up a throttle hole 505, so that the refrigerant that flows from the inlet 501 to the internal passage cannot pass through the throttle hole 505, and can only flow into the outlet 502 through the first valve port 516 and the first through hole 526 in sequence. When the electromagnetic valve is powered off, the first valve plug 503 moves leftward, and the first plug 523 is separated from the first valve port 516, so that the refrigerant may pass through the first through hole 526. When the electromagnetic valve is powered on, the first valve plug 503 moves rightward, and the first plug 523 is in close contact with the first valve port 516, so that the refrigerant cannot pass through the first through hole 526.

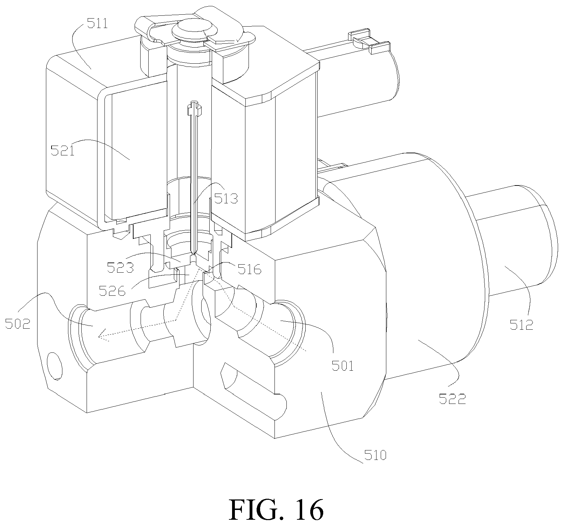

It should be noted that in FIG. 10 and FIG. 16, a dashed line with an arrow indicates a flowing route and a direction of the refrigerant when the electromagnetic valve function is used.

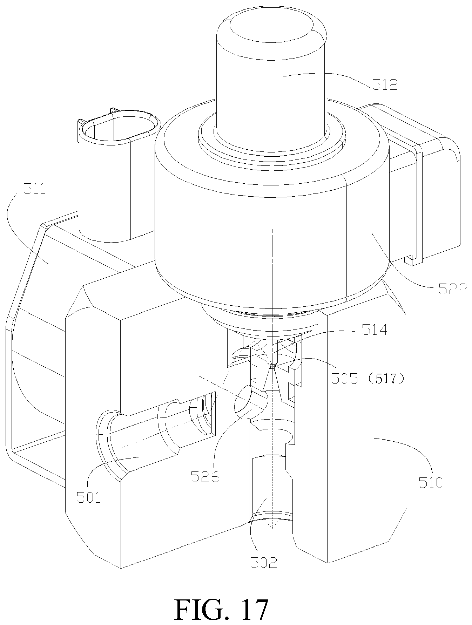

When only the electronic expansion valve function of the expansion switch valve needs to be used, as shown in FIG. 11 and FIG. 17, the second valve port 517, that is, the throttle port 505, is in an open state, and the first valve plug 503 plugs up the first valve port 516, so that the refrigerant that flows from the inlet 501 to the internal passage cannot pass through the first through hole 526, and can only flows to the outlet 502 through the second through hole 527 and the throttle port 505 in sequence, and the opening degree of the throttle port 505 can be adjusted by moving the second valve plug 504 upward and downward.

It should be noted that in FIG. 11 and FIG. 17, a dashed line with an arrow indicates a flowing route and a direction of the refrigerant when the electronic expansion valve function is used.

When both the electromagnetic valve function and the electronic expansion valve function of the expansion switch valve need to be used, as shown in FIG. 8, FIG. 14, and FIG. 15, a dashed line with an arrow indicates a flowing route and a direction of the refrigerant, the first valve plug 503 detaches from the first valve port 516, the first valve port 516 is in an open state, and the throttle port 505 is in an open state, so that the refrigerant that flows to the internal passage may flow to the outlet 502 separately through the first passage 506 and the second passage 507. Therefore, the expansion switch valve has both the electromagnetic valve function and the electronic expansion valve function.

It should be understood that the foregoing implementation is merely an example of the expansion switch valve, and is not intended to limit this disclosure. Other expansion switch valves having both the expansion valve function and the switch valve function are also applicable to this disclosure.

This disclosure further provides an electric vehicle, including the heat pump air-conditioning system according to this disclosure. The electric vehicle may be a pure electric vehicle, a hybrid electric vehicle, and a fuel cell vehicle.

Although preferred implementations of this disclosure are described in detail above with reference to the accompanying drawings, this disclosure is not limited to specific details in the foregoing implementations. Various simple variations can be made to the technical solutions of this disclosure within the scope of the technical idea of the present invention, and such simple variations all fall within the protection scope of this disclosure.

It should be further noted that the specific technical features described in the foregoing specific implementations can be combined in any appropriate manner provided that no conflict occurs. To avoid unnecessary repetition, various possible combination manners will not be otherwise described in this disclosure.

In addition, various different implementations of this disclosure may alternatively be combined randomly. Such combinations should also be considered as the content disclosed in this disclosure provided that these combinations do not depart from the concept of this disclosure.

## Claims

1. A heat pump air-conditioning system, comprising: an indoor condenser (601), an indoor evaporator (602), a compressor (604), an outdoor heat exchanger (605), and a first plate heat exchanger (625), wherein an outlet of the compressor (604) is in communication with an inlet of the indoor condenser (601), an outlet of the indoor condenser (601) is in communication with an inlet of the outdoor heat exchanger (605) selectively through a first throttle branch or a first through-flow branch, an outlet of the outdoor heat exchanger (605), selectively through a second throttle branch or a second through-flow branch, is in communication with a first end of a first branch (620) that is selectively open or closed and is in communication with a first end of second branch (621) that is selectively open or closed, a second end of the first branch (620) is in communication with a low-pressure air inlet (604a) of the compressor (604), a second end of the second branch (621) is in communication with an inlet of the indoor evaporator (602), an outlet of the indoor evaporator (602) is in communication with the low-pressure air inlet (604a) of the compressor (604), the outlet of the indoor condenser (601) is further in communication with the inlet of the outdoor heat exchanger (605) through a first enthalpy-increased branch (626) that is selectively open or closed, the outlet of the outdoor heat exchanger (605) is further in communication with a moderate-pressure air inlet (604b) of the compressor (604) through a second enthalpy-increased branch (627), the first enthalpy-increased branch (626) and the second enthalpy-increased branch (627) exchange heat by using the first plate heat exchanger (625), the second enthalpy-increased branch (627) is provided with a first expansion valve (628), and the outlet of the outdoor heat exchanger (605) is in communication with the first plate heat exchanger (625) through the first expansion valve (628).

2. The heat pump air-conditioning system according to claim 1, wherein the first branch (620) is provided with a first switch valve (622).

3. The heat pump air-conditioning system according to claim 1, wherein the second branch (621) is provided with a second switch valve (623).

4. The heat pump air-conditioning system according to claim 1, wherein the heat pump air-conditioning system further comprises a first three-way valve (630), the outlet of the outdoor heat exchanger (605) is in communication with an inlet of the first three-way valve (630) selectively through the second throttle branch or the second through-flow branch, a first outlet of the first three-way valve (630) is in communication with the first end of the first branch (620), and a second outlet of the first three-way valve (630) is in communication with the first end of the second branch (621).

5. The heat pump air-conditioning system according to claim 1, wherein the outlet of the indoor evaporator (602) is in communication with the low-pressure air inlet (604a) of the compressor (604) through a one-way valve (624).

6. The heat pump air-conditioning system according to claim 1, wherein the first enthalpy-increased branch (626) is provided with a third switch valve (629), and the outlet of the indoor condenser (601) is in communication with the first plate heat exchanger (625) through the third switch valve (629).

7. The heat pump air-conditioning system according to claim 1, wherein the first through-flow branch is provided with a fourth switch valve (608), and the first throttle branch is provided with a second expansion valve (607).

8. The heat pump air-conditioning system according to claim 1, wherein the heat pump air-conditioning system further comprises a first expansion switch valve (603), an inlet of the first expansion switch valve (603) is in communication with the outlet of the indoor condenser (601), an outlet of the first expansion switch valve (603) is in communication with the inlet of the outdoor heat exchanger (605), the first throttle branch is a throttle passage of the first expansion switch valve (603), and the first through-flow branch is a through-flow passage of the first expansion switch valve (603).

9. The heat pump air-conditioning system according to claim 1, wherein the second through-flow branch is provided with a fifth switch valve (610), and the second throttle branch is provided with a third expansion valve (609).

10. The heat pump air-conditioning system according to claim 9, wherein the heat pump air-conditioning system is applied to an electric vehicle, and the heat pump air-conditioning system further comprises a second plate heat exchanger (612), wherein the second plate heat exchanger (612) is disposed inside the second through-flow branch, and the second plate heat exchanger (612) is also disposed inside a motor cooling system of the electric vehicle.

11. The heat pump air-conditioning system according to claim 10, wherein a refrigerant inlet (612a) of the second plate heat exchanger (612) is in communication with the outlet of the outdoor heat exchanger (605), and a refrigerant outlet (612b) of the second plate heat exchanger (612) is in communication with an inlet of the fifth switch valve (610).

12. The heat pump air-conditioning system according to claim 10 or 11, wherein the motor cooling system comprises a motor, a motor heat dissipator (613), and a water pump (614) that are connected in series to the second plate heat exchanger (612) to form a loop.

13. The heat pump air-conditioning system according to claim 1, wherein the heat pump air-conditioning system further comprises a second expansion switch valve (606), an inlet of the second expansion switch valve (606) is in communication with the outlet of the outdoor heat exchanger (605), an outlet of the second expansion switch valve (606) is in communication with the first end of the first branch (620) that is selectively open or closed and is in communication with the first end of the second branch (621) that is selectively open or closed, the second throttle branch is a throttle passage of the second expansion switch valve (606), and the second through-flow branch is a through-flow passage of the second expansion switch valve (606).

14. The pump air-conditioning system according to claim 13, wherein the heat pump air-conditioning system is applied to an electric vehicle, and the heat pump air-conditioning system further comprises: a second plate heat exchanger (612), wherein a refrigerant inlet of the second plate heat exchanger (612) is in communication with the outlet of the second expansion switch valve (606), a refrigerant outlet of the second plate heat exchanger (612) is in communication with the first end of the first branch (620) that is selectively open or closed and is in communication with the first end of the second branch (621) that is selectively open or closed, and the second plate heat exchanger (612) is also disposed inside a motor cooling system of the electric vehicle.

15. The heat pump air-conditioning system according to claim 14, wherein the motor cooling system comprises a coolant trunk (616), a first coolant branch (617), and a second coolant branch (618), a first end of the coolant trunk (616) is selectively in communication with a first end of the first coolant branch (617) or a first end of the second coolant branch (618), and a second end of the first coolant branch (617) and a second end of the second coolant branch (618) are in communication with a second end of the coolant trunk (616), wherein a motor, a motor heat dissipator (613), and a water pump (614) are connected in series to the coolant trunk (616), and the second plate heat exchanger (612) is connected in series to the first coolant branch (617).

16. The heat pump air-conditioning system according to claim 1, wherein the heat pump air-conditioning system further comprises a gas-liquid separator (611), the outlet of the indoor evaporator (602) is in communication with an inlet of the gas-liquid separator (611), the second end of the first branch (620) is in communication with the inlet of the gas-liquid separator (611), and an outlet of the gas-liquid separator (611) is in communication with the low-pressure air inlet (604a) of the compressor (604).

17. The heat pump air-conditioning system according to claim 1, wherein the heat pump air-conditioning system further comprises a PTC heater (619), and the PTC heater (619) is used for heating air flowing through the indoor condenser (601).

18. The heat pump air-conditioning system according to claim 17, wherein the PTC heater (619) is disposed on a windward side or a leeward side of the indoor condenser (601).

19. An electric vehicle, comprising the heat pump air-conditioning system according to any of claims 1 to 18.
